# EUROPÄISCHE PATENTSCHRIFT

(11) **EP 2 361 191 B1**
(45) Veröffentlichungstag und Bekanntmachung des Hinweises auf die Patenterteilung: **29.08.2012**
(21) Anmeldenummer: 09771693.0
(22) Anmeldetag: 04.11.2009
(51) Int. Cl.: B60J 1/14, B60J 1/17, E05F 15/00

(54) **ANSTEUERVERFAHREN FÜR EINEN ELEKTRISCHEN FENSTERHEBER**
ACTIVATION METHOD FOR AN ELECTRICAL WINDOW LIFT
PROCEDE DE COMMANDE D'UN LEVE-GLACE ELECTRIQUE

(30) Priorität: 22.11.2008 DE 102008058588
(43) Veröffentlichungstag der Anmeldung: 31.08.2011
(73) Patentinhaber: Brose Fahrzeugteile GmbH & Co., 96103 Hallstadt (DE)
(72) Erfinder: ZELLMER, René, 200000 Shanghai (CN)
(74) Vertreter: FDST Patentanwälte
(86) Internationale Anmeldenummer: PCT/EP2009/007886
(87) Internationale Veröffentlichungsnummer: WO 2010/057577

(56) Entgegenhaltungen:
- WO-A1-01/53124
- CH-A- 176 787
- DE-A1- 4 325 501
- DE-U1-202006 003 285

## Beschreibung

Die Erfindung bezieht sich auf ein Ansteuerverfahren für einen elektrischen Fensterheber zum Schließen einer Vorderscheibe eines B-säulenlosen Fahrzeugs, welches eine verfahrbare Fondscheibe aufweist. Die Erfindung bezieht sich weiterhin auf eine Vorrichtung zur Durchführung des Verfahrens.

Als B-Säule eines Fahrzeugs ist üblicherweise die Verbindungsäule zwischen Fahrzeugboden und Fahrzeugdach in der Mitte eines Fahrgastraumes bezeichnet. Manche Fahrzeuge, insbesondere Coupés oder Cabriolets, weisen keine solche B-Säule auf. Diese sind hier als B-säulenlose Fahrzeuge bezeichnet.

Bei einem solchen B-säülenlosen Fahrzeug treffen eine vordere Seitenscheibe, also die nachfolgend als Vorderscheibe bezeichnete Scheibe in der Fahrer- oder Beifahrertüre und eine hintere Seitenscheibe, die üblicherweise als Fondscheibe bezeichnet wird, aufeinander. Die Vorderscheibe und die Fondscheibe sind in der Regel nur durch eine Dichtlippe voneinander getrennt.

Die Fondscheibe wird beim Schließen häufig nicht geradlinig nach oben verfahren, sondern bewegt sich im Wesentlichen auf einer S-förmigen Bahn nach oben und nach vorne. Werden die Vorderscheibe und die zugehörige Fondscheibe simultan geschlossen, beispielsweise im Zuge einer zentralen Schließfunktion, kollidiert die Fondscheibe mitunter mit der Vorderscheibe. Hierdurch kann ein üblicherweise vorhandener Einklemmschutz insbesondere der Vorderscheibe ein unerwünschtes Reversieren derselben auslösen. Dies kann - insbesondere im Zusammenhang mit einer zentralen Schließfunktion - nachteiligerweise dazu führen, dass die Vorderscheibe offensteht, während sich ein Fahrzeugnutzer im Glauben einer verschlossenen Vorderscheibe vom Fahrzeug entfernt.

Herkömmlicherweise wird dieses Problem dadurch gelöst, dass die Vorderscheibe und die zugehörige Fondscheibe bei einer zentralen Schließfunktion sequenziell angesteuert und demnach nacheinander geschlossen werden. Dies erfordert jedoch nachteiligerweise eine vergleichsweise lange Zeitdauer, bis alle Scheiben geschlossen sind.

Aus der WO 01/53124 A1 ist es bekannt, einen passiv erkennenden Einklemmschutz einzusetzten, der beim Schließen einer Fensterscheibe eines B-säulenlosen Fahrzeugs zunächst die im Wesentlichen vertikale Bewegungsphase und anschließend die im Wesentlichen horizontale Bewegungsphase überwacht. Hierzu ist vorgesehen, in einer ersten Phase die Fahrzeugscheibe beim Schließvorgang zwischen einer zumindest teilweise geöffneten und einer fast vollständig geschlossenen Scheibenposition unter Beibehaltung eines spitzwinkligen, sich in Schließrichtung erweiternden Spalts zwischen der seitlichen Scheibenkante und einer zugeordneten Schließkante einer weiteren Fensterscheibe im Wesentlichen vertikal zu verfahren und anschließend in der weitem Phase der Schließbewegung eine im Wesentlichen horizontale Verschiebung und/oder eine Drehbewegung der Fensterscheibe um die Querachse vorzunehmen.

Der Erfindung liegt die Aufgabe zugrunde, ein Ansteuerverfahren für einen elektrischen Fensterheber einer Vorderscheibe eines B-säulenlosen Fahrzeugs mit einer verfahrbaren Fondscheibe anzugeben, welches ein besonders schnelles und zuverlässiges Schließen aller Scheiben ermöglicht.

Diese Aufgabe wird erfindungsgemäß gelöst durch die Merkmale des Anspruchs 1. Demnach ist ein Ansteuerverfahren vorgesehen, bei dem die Vorderscheibe durch den Fensterheber unter Berücksichtigung eines Einklemmschutzes geschlossen wird. Weiterhin wird bei dem Ansteuerverfahren eine Schließbedingung abgefragt. Ist aufgrund dieser Schließbedingung davon auszugehen, dass ein einklemmschutzbedingtes Reversieren der Vorderscheibe durch eine Kollision mit der Fondscheibe verursacht wurde, so wird die Vorderscheibe nach dem einklemmschutzbedingten Reversieren erneut geschlossen.

Das Ansteuerverfahren bezieht sich dabei insbesondere auf ein Verfahren zur Ansteuerung eines Elektromotors des betreffenden elektrischen Fensterhebers.

Mit Vorderscheibe ist dabei eine vordere Seitenscheibe in der Fahrer- oder Beifahrertür eines Fahrzeugs bezeichnet. Mit Fondscheibe ist die Seitenscheibe des Fahrzeugs bezeichnet, die bei einem B-säulenlosen Fahrzeug direkt, d.h. nur durch eine Dichtlippe getrennt, rückwärtig an die Vorderscheibe angrenzt.

Mit Einklemmschutz ist eine Funktion der Fensterheberansteuerung bezeichnet, bei der die Scheibe, hier die Vorderscheibe, reversiert, wenn sich dieser beim Schließen ein Hindernis in den Weg stellt. Dies kann einerseits durch eine sogenannte Überschusskraftbegrenzung des elektrischen Fensterhebers realisiert sein, wobei der Fensterheber zum Reversieren angesteuert wird, wenn eine sogenannte Überschusskraft seines Elektromotors einen gewissen Schwellenwert überschreitet. Andererseits kann der Einklemmschutz auch bei einem Drehzahleinbruch oder Drehmomentanstieg des betreffenden Elektromotors ausgelöst werden.

Vorteilhafterweise wird bei dem vorliegenden Ansteuerverfahren eine Schließbedingung überprüft, aufgrund der entschieden wird, ob der Einklemmschutz durch einen tatsächlichen Einklemmfall ausgelöst wird, oder ob der Einklemmschutz fälschlicherweise durch eine Kollision mit der nach oben (und vorne) verfahrenden Fondscheibe ausgelöst wird. Als Schließbedingung wird dabei eine oder jede Bedingung herangezogen, aufgrund der entschieden werden kann, ob die Vorderscheibe und die Fondscheibe simultan geschlossen werden oder nicht.

Ein unerwünschtes Auslösen des Einklemmschutzes aufgrund einer Kollision der Fondscheibe mit der Vorderscheibe ist häufig durch einen fehlerhaft eingestellten Fensterheber der Fondscheibe verursacht. Durch das vorgestellte Verfahren stellt aber ein fehlerhaftes Auslösen des Einklemmschutzes kein Problem dar, so dass vorteilhafterweise der Fensterheber der Fondscheibe schon bei der Fertigung - und später bei der Wartung - vergleichsweise weniger exakt eingestellt werden muss. Auch ein möglicherweise verschleißbedingtes Verstellen des Fensterhebers stellt durch das erfindungsgemäße Ansteuerverfahren kein Problem dar.

Durch das vorgestellte Ansteuerverfahren ist es möglich, dass die Vorder- und die Fondscheibe, insbesondere im Zuge einer zentralen Schließfunktion, simultan zum Schließen angesteuert werden können. Hierdurch wird ein wesentlicher Zeitgewinn beim Schließen der Scheiben erreicht. Zudem wird durch das vorgestellte Ansteuerverfahren ein besonders zuverlässiges Schließen der Scheiben ermöglicht. Es wird hierdurch nämlich sicher vermieden, dass die Vorderscheibe - nach einem fälschlicherweise durch die Fondscheibe ausgelösten Reversieren - offen stehen bleibt.

In einer bevorzugten Ausführungsform des Ansteuerverfahrens wird als Schließbedingung eine zentrale Schließfunktion herangezogen. Bei einer solchen zentralen Schließfunktion werden alle Scheiben (simultan) nach oben verfahren (im Falle eines Cabriolets ggf. auch ein Verdeck geschlossen) und die Fahrzeugtüren verschlossen. Als Schließbedingung wird also überprüft, ob der Fensterheber aufgrund der zentralen Schließfunktion zum Schließen der Vorderscheibe angesteuert wird. Bevorzugt wird dabei überprüft, ob die zentrale Schließfunktion - und damit das Scheibenschließen - durch eine Funkfernbedienung eines Autoschlüssels ausgelöst wird. Wird die Vorderscheibe infolge der zentralen Schließfunktion geschlossen, ist davon auszugehen, dass der Einklemmschutz durch Kollision mit der in diesem Fall wahrscheinlich auch nach oben fahrenden Fondscheibe verursacht wird. Dementsprechend wird die Vorderscheibe nach dem Reversieren erneut geschlossen.

Im Falle eines B-säulenlosen Cabriolets wird in einer weiteren Ausführungsform des Ansteuerverfahrens als Schließbedingung zusätzlich oder alternativ geprüft, ob der Fensterheber infolge einer Verdeckschließfunktion, also beispielsweise durch Betätigen eines entsprechenden Tasters im Fahrzeug oder am Autoschlüssels, zum Schließen der Vorderscheibe angeregt wird. Hier werden wiederum beim Verschließen des Verdecks gegebenenfalls simultan alle Scheiben nach oben verfahren. Wird der Fensterheber infolge der Verdeckschließfunktion zum Schließen der Vorderscheibe angesteuert, so wird die Vorderscheibe nach dem Reversieren erneut geschlossen, da wiederum davon auszugehen ist, dass kein Einklemmfall vorliegt.

Wird der Fensterheber durch einen Fensterhebertaster im Fahrzeug - also manuell - zum Schließen der Vorderscheibe angeregt, so wird als Schließbedingung zusätzlich geprüft, ob auch die zugehörige Fondscheibe gleichzeitig geschlossen wird. Ist dies der Fall, so ist wiederum davon auszugehen, dass das Reversieren der Vorderscheibe fälschlicherweise durch Kollision mit der Fondscheibe ausgelöst wird, so dass die Vorderscheibe nach dem Reversieren erneut geschlossen wird. Ist dies nicht der Fall, so wird die Vorderscheibe nach dem Reversieren nicht erneut geschlossen.

In einer besonders vorteilhaften Ausführungsform des Ansteuerverfahrens ist vorgesehen, dass der Einklemmschutz der Vorderscheibe beim erneuten Reversieren bei einer niedrigeren Auslöseschwelle auslöst. Falls das erste Reversieren durch einen echten Einklemmfall ausgelöst wurde, obwohl die Schließbedingung(en) abgefragten worden sind, kann demnach sichergestellt werden, dass die Vorderscheibe beim erneuten Schließen (und erneutem echten Einklemmfall) zuverlässig erneut reversiert wird.

Eine entsprechende Ansteuereinheit ist dazu ausgebildet, einen elektrischen Fensterheber für eine Vorderscheibe eines B-säulenlosen Fahrzeugs, welches eine verfahrbare Fondscheibe aufweist, gemäß dem oben beschriebenen Ansteuerverfahren nach einem der Ansprüche 1 bis 6 anzusteuern. Zweckmäßigerweise umfasst die Ansteuereinheit hierzu eine Abfrageeinheit, die dazu ausgebildet ist, die Schließbedingung(en) zu überprüfen. Bevorzugt ist dabei die Abfrageeinheit als ein Softwaremodul ausgebildet.

Vorteilhafterweise kann mit dieser Ansteuereinheit bzw. mit der als Software implementierten Abfrageeinheit auch ein Fahrzeug vergleichsweise einfach nachgerüstet werden. Dadurch können auch bereits bestehende Fahrzeuge mit einer Funktion zum schnellen und sicheren Scheibenschließen ausgestattet werden.

Nachfolgend wird ein Ausführungsbeispiel der Erfindung anhand einer Zeichnung näher erläutert. Darin zeigen:
- Fig. 1: in schematischer Darstellung eine Ansteuereinheit zum elektrischen Schließen einer Vorderscheibe, sowie einer Fondscheibe eines B-säulenlosen Fahrzeugs (Cabriolet),
- Fig. 2: einen Drehzahlverlauf eines Motors eines elektrischen Fensterhebers, und
- Fig. 3: ein Ablaufdiagramm eines Ansteuerverfahrens der Ansteuereinheit zum zuverlässigen Schließen der Vorderscheibe.

Einander entsprechende Teile und Größen sind in allen Figuren stets mit den gleichen Bezugszeichen versehen.

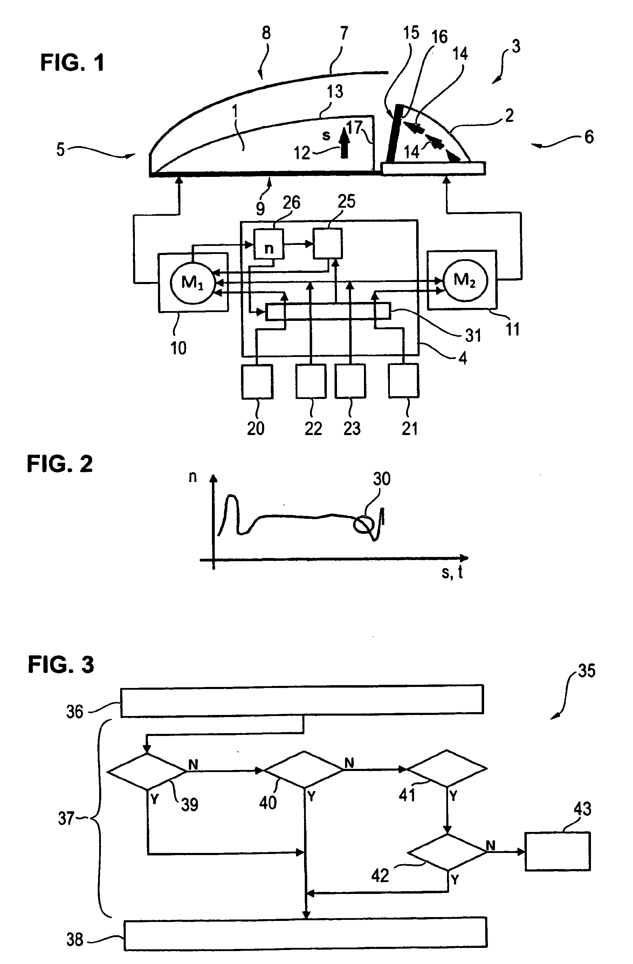

Fig. 1 zeigt in der Darstellung oben in einer schematischen Seitenansicht eine Vorderscheibe 1 (in der Darstellung links), sowie eine Fondscheibe 2 (in der Darstellung rechts) eines - nur grob ausschnittsweise angedeuteten - B-säulenlosen Cabriolets 3. In der Darstellung unten ist eine Ansteuereinheit 4 zum elektrischen Öffnen und Schließen der Scheiben schematisch skizziert.

Mit Vorderscheibe 1 ist die Scheibe einer der seitlichen Fahrzeugtüren des Cabriolets 3 bezeichnet, die - in der hier dargestellten bestimmungsgemäßen Einbausituation - im Wesentlichen einer Vorder- oder Frontseite 5 des Cabriolets 3 zugewandt ist. Mit Fondscheibe 2 ist eine der Seitenscheiben bezeichnet, die - wiederum in bestimmungsgemäßer Einbausituation - einer zur Frontseite entgegengesetzten Rückseite 6 des Cabriolets 3 zugewandt ist, also eine Seitenscheibe im Fond des Fahrzeugs. Hier dargestellt sind die Vorderscheibe 1, sowie die Fondscheibe 2 auf der Fahrerseite des Cabriolets 3. Die Folgende Beschreibung ist gilt analog auch für die Scheiben der Beifahrerseite des Cabriolets 3.

Eine einem angedeuteten Verdeck 7 des Cabriolets 3 zugeordnete Seite ist als Oberseite 8 des Cabriolets 3 bezeichnet, während eine dazu entgegengesetzte Seite als seine Unterseite 9 bezeichnet ist.

Die Begriffe "Ober-", "Unter-", "Front-" und "Rückseite" sowie die korrespondierenden Begriffe "oben", "unten", "vorne" und "hinten" beziehen sich auf die bestimmungsgemäße Orientierung des Cabriolets 3 und werden im Folgenden unabhängig von dessen tatsächlicher Stellung im umgebenden Raum verwendet. Insbesondere werden diese Begriffe ebenso für alle bestimmungsgemäß an dem Cabriolet 3 angebrachten Bauteile herangezogen.

Sowohl die Vorderscheibe 1 als auch die Fondscheibe 2 ist durch jeweils einen schematisch angedeuteten elektrischen Fensterheber 10 bzw. 11 verfahrbar. Dabei wird die Vorderscheibe 1 durch den Fensterheber 10 im Wesentlichen in einer Linearbewegung nach oben bzw. unten verschoben. Diese Bewegung ist durch den Pfeil 12 gekennzeichnet. Beim Verfahren legt sie dabei mit ihrem oberen Rand 13 den Weg s zurück. In geschlossenem Zustand stößt der obere Rand 13 an das (geschlossene) Verdeck 7.

Die Fondscheibe 2 wird durch den Fensterheber 11 in einer durch die Pfeile 14 gekennzeichneten Bewegung nach oben und vorne verfahren. An ihrem im geschlossenen Zustand vorderen Rand 15 ist die Fondscheibe 2 mit einer Dichtlippe 16 versehen. Mit dieser liegt sie im geschlossenen Zustand beider Scheiben an einem hinteren Rand 17 der Vorderscheibe 1 dichtend an.

Jeder Fensterheber 10, 11 umfasst jeweils einen nachfolgend als Motor M₁ bzw. M₂ bezeichneten elektromotorischen Antrieb. Sowohl der erste Motor M₁ als auch der zweite Motor M₂ wird mittels der Ansteuereinheit 4 angesteuert. Die Ansteuereinheit 4 kann dabei beispielsweise separat in die Fahrertüre oder auch in einen der elektrischen Fensterheber 10, 11 integriert sein.

Beide Fensterheber 10, 11 bzw. deren Motoren M₁ bzw. M₂ können durch unterschiedliche Schalter oder Funktionen zum Schließen der Scheiben angeregt werden, wobei jede Betätigung der Fensterheber 10, 11 jeweils über die Ansteuereinheit 4 erfolgt. Zum Einen wird der Motor M₁ durch Betätigung eines ersten, der Vorderscheibe 1 zugeordneten Fensterhebertasters 20 separat zum Schließen der Vorderscheibe 1 angesteuert. Entsprechend wird der Motor M₂ durch Betätigung eines zweiten, der Fondscheibe 2 zugeordneten Fensterhebertaster 21 ebenfalls separat angesteuert.

Zum Anderen werden beide Motoren M₁, M₂ simultan zum Schließen der zugehörigen Scheiben angeregt, wenn durch Betätigen eines Verdecktasters 22 das Verdeck 7 geschlossen werden soll. In diesem Fall werden sowohl das Verdeck 7 als auch die Vorderscheibe 1 und die Fondscheibe 2 geschlossen. Der Verdecktaster 22 ist beispielsweise im Armaturenbrett oder in einer Mittelkonsole des Cabriolets 3 integriert.

Weiterhin werden beide Motoren M₁, M₂ simultan zum Schließen der zugehörigen Scheiben angeregt, wenn eine zentrale Schließfunktion ausgelöst wird. Dies erfolgt beispielsweise durch Betätigung eines Funkschlüssels 23, kann jedoch auch durch Betätigung eines entsprechen ausgestalteten Türschlosses der Fahrertüre erfolgen. Dabei werden wiederum das Verdeck 7 sowie die Vorderscheibe 1 und die Fondscheibe 2 geschlossen. Zusätzlich werden die Fahrzeugtüren verschlossen.

Um beim elektrischen Schließen der Vorderscheibe 1 die Gefahr zu reduzieren, dass ein Gegenstand, beispielsweise ein Körperteil zwischen oberem Rand 13 der Vorderscheibe 1 und dem Verdeck 7 eingeklemmt wird, umfasst die Ansteuereinheit 4 einen, insbesondere auf Softwarebasis oder als Algorithmus in eine Steuerelektronik des Fensterhebers implementierten Einklemmschutz 25, der an einen Drehzahlmesser 26 gekoppelt ist. Der Drehzahlmesser 26 erfasst die Drehzahl n des Motors M₁ und gibt die erfasste Drehzahl an den Einklemmschutz 25 weiter. Bricht die Drehzahl n ein, so ermittelt der Einklemmschutz 25 bezüglich der Vorderscheibe 1 einen Einklemmfall. Daraufhin triggert der Einklemmschutz 25 den Motor M₁ an, die Drehrichtung zu ändern, und somit die Vorderscheibe 1 zu reversieren.

In Fig. 2 ist die Drehzahl n in Abhängigkeit von der Zeit t bzw. korrespondierend damit von der Position s der Vorderscheibe 1 beim Schließen derselben dargestellt. Dabei wird in einem Bereich 30 ein Drehzahleinbruch festgestellt. Dieser kann einerseits durch einen tatsächlichen Einklemmfall verursacht sein. Anderer seits erfolgt ein solcher Drehzahleinbruch auch dann, wenn - wie in Fig. 1 dargestellt - die Vorderscheibe 1 sowie die Fondscheibe 2 simultan geschlossen werden und die Dichtlippe 16 auf den hinteren Rand 17 der Vorderscheibe 1 trifft. Auch in diesem Fall triggert der Einklemmschutz 25 möglicherweise den Fensterheber 10 bzw. den Motor M₁ an, die Vorderscheibe 1 zu reversieren.

Um zu vermeiden, dass ein solcher vermeintlicher Einklemmfall dazu führt, dass die Vorderscheibe 1 in geöffneter Position verbleibt, ist in die Ansteuereinheit 4 eine Abfrageeinheit 31 (Fig. 1) integriert. Die Abfrageeinheit 31 ist einerseits dazu ausgebildet, zu erkennen, ob die Vorderscheibe 1 reversiert. Hierzu ist sie an den Drehzahlmesser 26 gekoppelt. Weiterhin ist die Abfrageeinheit 31 dazu ausgebildet, zu erkennen, mittels welchen Tasters oder Schalters 20 bis 23 die Motoren M₁ bzw. M₂ zum Schließen der jeweils zugehörigen Scheiben angesteuert wurden. Zudem ist die Abfrageeinheit 31 dazu ausgebildet, den Motor M₁, sowie den Einklemmschutz 25 gemäß einem Ansteuerverfahren nach dem in Fig. 3 veranschaulichten Ablaufdiagramm 35 anzusteuern.

Dabei wird in einem ersten Schritt 36 zunächst festgestellt, dass die Vorderscheibe 1 reversiert wird. Darauf hin wird durch die Abfrageeinheit 31 in einer Abfragesequenz 37 anhand mehrerer Schließbedingungen überprüft, ob der Einklemmfall mit vergleichsweise hoher Wahrscheinlichkeit durch eine Kollision mit der Fondscheibe 2 verursacht wurde, und somit als unechter Einklemmfall eingestuft werden kann. Ist dies der Fall, so wird in einem Schritt 38 einerseits der Motor M₁ angesteuert, die Vorderscheibe 1 erneut zu schließen. Andererseits wird in dem Schritt 38 ein Signal an den Einklemmschutz 25 ausgegeben, die Auslöseschwelle zu reduzieren, so dass die Vorderscheibe 1 bei einem erneuten Einklemmfall nun früher reversiert wird.

In der Abfragesequenz 37 wird in einer ersten Abfrage 39 überprüft, ob der Motor M₁ durch Betätigung des Funkschlüssels 23 angesteuert wurde. Ist dies der Fall, so liegt wahrscheinlich kein Einklemmfall vor und es erfolgt Schritt 38. Ist dies nicht der Fall, wird in einer zweiten Abfrage 40 überprüft, ob der Motor M₁ durch Betätigung des Verdecktasters 22 angesteuert wurde. Ist dies der Fall, ist wiederum von einem unechten Einklemmfall auszugehen und es erfolgt Schritt 38. Ist dies nicht der Fall, wird in einer dritten Abfrage 41 - redundant - überprüft, ob der Motor M₁ durch Betätigung des Fensterhebertasters 20 angesteuert wurde. Ist dies der Fall, wird in einer weiteren Abfrage 42 überprüft, ob gleichzeitig der Motor M₂ durch Betätigung des Fensterhebertasters 21 zum Schließen der Fondscheibe 2 angesteuert wurde. Ist dies der Fall, liegt wiederum vermutlich ein unechter Einklemmfall vor, so dass die Vorderscheibe 1 im Schritt 38 mit reduzierter Auslöseschwelle des Einklemmschutzes 25 erneut geschlossen wird. Wurde der Motor M₂ nicht simultan zum Schließen der Fondscheibe 2 angesteuert, so ist von einem echten Einklemmfall auszugehen, so dass daraufhin in Schritt 43 keine Aktion ausgelöst wird, die Vorderscheibe 1 somit reversiert bleibt.

### Bezugszeichenliste

- 1: Vorderscheibe
- 2: Fondscheibe
- 3: Cabriolet
- 4: Ansteuereinheit
- 5: Frontseite
- 6: Rückseite
- 7: Verdeck
- 8: Oberseite
- 9: Unterseite
- 10: Fensterheber
- 11: Fensterheber
- 12: Pfeil
- 13: Rand
- 14: Pfeil
- 15: Rand
- 16: Dichtlippe
- 17: Rand
- 20: Fensterhebertaster
- 21: Fensterhebertaster
- 22: Verdecktaster
- 23: Funkschlüssel
- 25: Einklemmschutz
- 26: Drehzahlmesser
- 30: Bereich
- 31: Abfrageeinheit
- 35: Ablaufdiagramm
- 36: Schritt
- 37: Abfragesequenz
- 38: Schritt
- 39: Abfrage
- 40: Abfrage
- 41: Abfrage
- 42: Abfrage
- 43: Schritt

- M₁: Motor
- M₂: Motor
- n: Drehzahl
- s: Weg

## Patentansprüche

1. Ansteuerverfahren für einen elektrischen Fensterheber (10) zum Schließen einer Vorderscheibe (1) eines B-säulenlosen Fahrzeugs (3), welches eine verfahrbare Fondscheibe (2) aufweist,
- bei dem die Vorderscheibe (1) durch den Fensterheber (10) unter Berücksichtigung eines Einklemmschutzes (25) geschlossen wird,
- **dadurch gekennzeichnet, dass** bei dem Ansteuerverfahren eine Schließbedingung abgefragt wird, und wobei
- die Vorderscheibe (1) nach einem einklemmschutzbedingten Reversieren erneut geschlossen wird, wenn aufgrund der Schließbedingung das einklemmschutzbedingte Reversieren durch eine Kollision mit der Fondscheibe (2), die simultan geschlossen wird, bedingt ist.

2. Ansteuerverfahren nach Anspruch 1, bei dem die Vorderscheibe (1) nach dem Reversieren erneut geschlossen wird, wenn als Schließbedingung festgestellt wird, dass der Fensterheber (10) infolge einer zentralen Schließfunktion zum Schließen der Vorderscheibe (1) angesteuert wurde.

3. Ansteuerverfahren nach Anspruch 2, bei dem die Vorderscheibe (1) nach dem Reversieren erneut geschlossen wird, wenn als Schließbedingung festgestellt wird, dass der Fensterheber (10) durch eine Funkfernbedienung eines Autoschlüssels (23) zum Schließen der Vorderscheibe (1) angesteuert wurde.

4. Ansteuerverfahren nach einem der Ansprüche 1 bis 3, bei dem die Vorderscheibe (1) nach dem Reversieren erneut geschlossen wird, wenn als Schließbedingung festgestellt wird, dass der Fensterheber (10) infolge einer Verdeckschließfunktion zum Schließen der Vorderscheibe (1) angesteuert wurde.

5. Ansteuerverfahren nach einem der Ansprüche 1 bis 4, bei dem die Vorderscheibe (1) nach dem Reversieren erneut geschlossen wird, wenn als Schließbedingung festgestellt wird, dass der Fensterheber (10) durch einen Fensterhebertaster (20) zum Schließen der Vorderscheibe (1) angesteuert und gleichzeitig die zugehörige Fondscheibe (2) geschlossen wurde.

6. Ansteuerverfahren nach einem der Ansprüche 1 bis 5, bei dem der Einklemmschutz (25) bei dem erneuten Schließen der Vorderscheibe (1) eine im Vergleich zum ersten Schließen niedrigere Auslöseschwelle aufweist, bei der die Vorderscheibe (1) reversiert wird.

## Claims

1. Actuation method for an electric window winder (10) for closing a front window (1) of a vehicle (3) without a B-pillar and with a moveable rear window (2),
- in which the front window (1) is closed by the window winder (10) taking into consideration an anti-trap device (25),
- **characterized in that** a closing condition is checked in the actuation method, and
- the front window (1) being closed again after an anti-trap device-related reversing operation, when, due to the closing condition, the anti-trap device-related reversing operation is caused by a collision with the rear window (2) which is closed simultaneously.

2. Actuation method according to claim 1, in which the front window (1) is closed again after the reversing operation, when as closing condition it is established that the window winder (10) has been actuated to close the front window (1) as a result of a central locking function.

3. Actuation method according to claim 2, in which the front window (1) is closed again after the reversing operation, when as closing condition it is established that the window winder (10) has been actuated to close the front window (1) by a radio remote control of a car key (23).

4. Actuation method according to one of the claims 1 to 3, in which the front window (1) is closed again after the reversing operation, when as closing condition it is established that the window winder (10) has been actuated to close the front window (1) as a result of a top closing function.

5. Actuation method according to one of the claims 1 to 4, in which the front window (1) is closed again after the reversing operation, when as closing condition it is established that the window winder (10) has been actuated to close the front window (1) by a window winder button (20) and that, at the same time, the associated rear window (2) has been closed.

6. Actuation method according to one of the claims 1 to 5, in which the anti-trap device (25), in the case of the front window (1) being closed again, has a lower initiation threshold, at which the front window (1) is reversed, compared to the first closing operation.

## Revendications

1. Méthode d'actionnement pour un lève-vitre électrique (10) pour fermer une vitre frontale (1) d'un véhicule (3) sans un pilier B et avec une vitre arrière (2) déplaçable,
- dans laquelle la vitre frontale (1) est fermée par le lève-vitre (10) en considération d'un dispositif anti-pincement (25),
- **caractérisée en ce qu'**une condition de fermeture est vérifiée dans la méthode d'actionnement, et
- la vitre frontale (1) étant refermée après un fonctionnement réversible relatif au dispositif anti-pincement, quand, en raison de la condition de fermeture, le fonctionnement réversible relatif au dispositif anti-pincement est causé par une collision avec la vitre arrière (2) étant fermée simultanément.

2. Méthode d'actionnement selon la revendication 1, dans laquelle la vitre frontale (1) est refermée après le fonctionnement réversible, quand, comme condition de fermeture, il est constaté que le lève-vitre (10) a été actionné pour fermer la vitre frontale (1) en conséquence d'un verrouillage centralisé.

3. Méthode d'actionnement selon la revendication 2, dans laquelle la vitre frontale (1) est refermée après le fonctionnement réversible, quand, comme condition de fermeture, il est constaté que le lèvre-vitre (10) a été actionné pour fermer la vitre frontale (1) par la radio télécommande d'un clé de voiture (23).

4. Méthode d'actionnement selon l'une des revendications 1 à 3, dans laquelle la vitre frontale (1) est refermée après le fonctionnement réversible, quand, comme condition de fermeture, il est constaté que le lève-vitre (10) a été actionné pour fermer la vitre frontale (1) en conséquence d'un fonction de fermeture de la capote.

5. Méthode d'actionnement selon l'une des revendications 1 à 4, dans laquelle la vitre frontale (1) est refermée après le fonctionnement réversible, quand, comme condition de fermeture, il est constaté que le lève-vitre (10) a été actionné pour fermer la vitre frontale (1) par un bouton de lève-vitre (20) et que, en même temps, la vitre arrière (2) associée a été fermée.

6. Méthode d'actionnement selon l'une des revendications 1 à 5, dans laquelle le dispositif anti-pincement (25), en cas que la vitre frontale (1) soit refermée, a un seuil d'initiation, auquel la vitre frontale (1) est reversée, plus inférieur, comparé à la première fermeture.
